# EUROPEAN PATENT SPECIFICATION

(11) **EP 0 718 809 B1**
(45) Date of publication and mention of the grant of the patent: **08.03.2000**
(21) Application number: 95500171.4
(22) Date of filing: 19.12.1995
(51) Int. Cl.: G07D 7/00

(54) **A method and apparatus for characterizing and discriminating bank notes and legal currency**
Verfahren und Vorrichtung zum Kennzeichnen und Unterscheiden von Banknoten und legalen Zahlungsmitteln
Méthode et dispositif pour caractériser et pour discriminer des billets de banque et des moyens de paiement légaux

(30) Priority: 23.12.1994 ES 9402631
(43) Date of publication of application: 26.06.1996
(73) Proprietor: AZKOYEN INDUSTRIAL, S.A., E-31350 Peralta (Navarra) (ES)
(72) Inventor: Echapare Ibarrola, Jesus, 31007 Pamplona (Navarra) (ES); Ormazabal Aramburu, Angel, 20500 Modragon ( Guipuzcoa) (ES)
(74) Representative: Davila Baz, Angel

(56) References cited:
- EP-A- 0 558 340
- EP-A- 0 605 208
- EP-A- 0 612 043
- WO-A-91/03031
- GB-A- 2 088 051
- JP-U- 63 080 682

## Description

This invention refers to a method for characterizing and discriminating bank notes and legal currency, by means of analysis of the colouration of images obtained from the said bank notes or currency. The invention also includes the apparatus for carrying out the said method.

More specifically, the method of the invention is of the type which includes the transport of the note or currency document to be analyzed along the length of a trajectory in which the said document is illuminated and images are obtained for the posterior analysis of the colouration of the same.

The use of point sensors is a known technique for obtaining images, these permitting the observation of a certain number of lines throughout the whole length of the document. In this respect patents US 3679314, GB 1470737 and US 4618257 may be mentioned, in which light signals are detected by broad spectrum photosensorization, including illumination of the document by chromatic light sources, as well as patents EP 395833, GB 2064101, GB 2192275 and US 4618257, in which the light signal is detected by narrow band photosensors, each of which is sensitive to a specific colour, while the document is illuminated by broad spectrum light.

The use of lineal sensors is also a known technique for capturing images, these permitting the observation of the entire surface of the document. Patents EP 78708, GB 2088051 and EP 537513 belong to this group, in which light signals are captured by means of broad spectrum photosensorization and illumination of notes by monochromatic light sources, as well as US patent 4922109, in which the light signal is detected by broad spectrum photosensors, each of which is sensitive to a specific colour, the document being illuminated by broad spectrum light. Spanish patent application P 9302692 by the same applicants (see also EP 0 660 277 A, published 28.06.1995) may also be mentioned as falling within this group, this referring to a method which is based on the usage of a red - green - blue sensor which itself supplies information on each red, green and blue component, the document preferentially being illuminated by broad spectrum light sources.

The method which is the object of this invention belongs to the second of the groups mentioned, in which images are acquired by the usage of lineal sensors, typically lineal CCD sensors (monochrome or RGB colour) or triads of photodiodes with red, green and blue filters.

In any of the systems described, documents are analyzed by methodology which is independent of the denomination of the note and its position on being introduced, which, together with the image acquisition system, means that the rejection of forgeries and the acceptance of legal notes are not sufficiently reliable.

European publication no. 612043 indicates a sheet discriminating apparatus for discriminating sheets (eg banknotes) according to their kind. The sheet discriminating apparatus comprises a plurality of light emitting elements arranged in a plurality of lines in the direction perpendicular to a sheet conveyance direction, a plurality of light receiving elements each being positioned to face an associated one of said light emitting elements, each of said light receiving elements receiving light emitted from the associated light emitting element, said light emitting element being arranged such that at least one light receiving element receives light emitted from said associated light emitting element and is partially screened by the side edge of the conveyed sheet, a sheet length detecting means for detecting the length of the sheet in the direction perpendicular to said conveyance direction based upon the ratio of the outputs of the light receiving elements which are completely screened by the conveyed sheet to those of other light receiving elements which are partially screened by said conveyed sheet, and a pattern comparing means for determining pattern data of said sheet in accordance with time series outputs of said light receiving elements and for comparing said pattern data with a reference pattern data selected from a plurality of reference pattern data each corresponding to a kind of sheet. The kind of sheet is discriminated in accordance with the length of the sheet detected by said sheet length detecting means and the result obtained by said pattern comparing means.

The object of this invention is a method for discriminating bank notes and legal currency, hereunder bank notes, Lased on the division of the same into areas for specific analysis and their posterior treatment, as is described below.

The method which is the object of the invention achieves a greater degree of security in the rejection of falsifications, together with an improved rate of acceptance of legal notes. Another outstanding advantage of the method covered by the invention is the increased ease with which notes are introduced, due to increased tolerance of variations in the position of the same at the start of the process.

It is known that bank notes include different types of print (engraving, lithography...) and different inks (inks visible to infrared radiation, inks of different colours within the visible spectrum, inks that become fluorescent under ultraviolet illumination, etc.) and different security features, such as: water marks, embedded security threads, holograms, ...

It may therefore be concluded that each note presents certain zones which are of interest for analysis, such as those defined by engraved printing, fluorescent fibres, water marks, security threads, etc., which differ according to the denomination of the note and the figure, pattern or characters that are shown together with their position on the note.

As opposed to existing procedures for analyzing notes by a methodology which is independent of the denomination of the note and the way in which it is introduced, this process proposes a methodology that is completely dependent on the denomination of notes and the way that they are introduced, due to the breaking down of the surface of the note into as many zones or areas to be studied as there are elements of interest on the note which it is wished to recognize.

The invention provides a method and an apparatus for characterizing and discriminating bank notes and documents which are legal tender, as defined in the appended claims 1 and 9 respectively.

According to the method of the invention, during an initial phase the possible denomination of the note and the position in which it is introduced are determined by measurement of its width and the identification of some of those characteristics which are present on the initial zone of the document.

For each type of note and position of introduction, analysis of the same will be undertaken by the study of specific zones. These said zones are to be defined by the coordinates of their edges respecting the original edges of the note and are to be circumscribed, within the tolerances that are advisable for each case, to the different areas of interest on the note, such as: motifs which coincide on the upper and lower sides of the note, water marks, security threads, holograms, predominant coloured signs, the area of the series number, alphanumerical character areas,...

For each of these areas the following are to be specifically assigned:

The illumination used: suitable illumination is to be used for each zone to be analyzed. Thus infrared illumination is to be used to detect the existence of inks that are absorbent within the infrared spectrum. Broad spectrum visible illumination is to be used for those areas in which it is wished to undertake chromatic analysis. Ultraviolet illumination is to be used for zones containing fluorescent substances. Illumination by a combination of sources may be of interest in some zones, for example visible light together with infrared light. The level of illumination is to be graduated by the electronic device that is suitable for each zone according to the level of light absorption of the inks in the said zone, thereby attaining suitable levels of contrast. Illumination is likewise to be set to transmission or reflection for each zone, and it is to be possible to combine both.
- The speed of the transport system: by the lineal sensor used and the note transport system, an image is to be gained of each zone that is subjected to analysis. This said digitalized image is to be stored in the form of a two dimensional matrix, one dimension of which corresponds to the number of elements of the lineal photosensor focused within the zone, and the other dimension to the number of lines acquired during the sweep of the zone.
   One of the forms of modifying the number of lines acquired in each zone consists of varying the speed at which the note is transported, such that to increase definition in the direction in which notes move forward the speed of transport will be reduced and vice versa, a suitable speed of transport being programmed for the analysis of each zone.
- The resolution and sensitivity of the capture system: depending on the degree of detail required in the capture of the image which is the object of analysis within each zone, a certain level of resolution is to be set. Crosswise resolution is to be a function of the number of elements in the lineal photosensor that are taken into account, e.g., all the elements, one of each couple (half resolution) one of each three, ... . Longitudinal resolution may be modified by varying the time of acquisition between two lines or the speed of the transport system (the section above). For some zones it is of interest to modify the sensitivity of the image sensor system, e.g. in areas that are strongly absorbent (very dark) results are improved by modifying the measurement range of the sensor system.
- The processing of the signal and the obtention of particular parameters for each zone: information obtained following digitalization of the image acquired in each zone is typically to take the form of a two dimensional matrix for each colour component.

On the basis of the three two dimensional matrixes (one for each colour component ^{R, G, B}) obtained for each zone, the identifying parameters for the said zone are to be defined, which together with the parameters that identify the remaining zones that are subject to analysis are to serve for validation of the inspected note according to the results of the comparison to be established with the parameters that are stored within the memory and which correspond to similar zones as established for standard notes.

A first group of the said parameters is to be composed of the parameters which we define as statistical, these being obtained directly from the above - mentioned two dimensional matrixes (these said matrixes representing the distribution of colour levels in the zone analyzed). The statistical parameters calculated on the basis of the elements within the fundamental colour matrixes may be: the mean, typical deviation, total range, upper range, lower range, points around the average, upper average and lower average, etc., for each one of the distributions of fundamental colours.

As well as the statistical parameters described above which are obtained from each one of the three colour matrixes, it is also of interest to make use of the relationships between the same to obtain relative parameters that are more stable when variations occur due to ageing, dirt, temperature, ... .

Nevertheless, the usage of statistical parameters gives rise to a certain degree of uncertainty, as hypothetically the case may arise in which a matrix obtained from an image different from that corresponding to the zone under analysis but having a distribution of colour levels such that statistical parameters similar to the correct ones are obtained. This is the reason why the level of security is increased by comparison of the parameters, using complementary parameters also obtained from colour distribution matrixes. These said new parameters are extracted from the curves which we define as colour profiles throughout the principal dimensions of the zone. These said dimensions may be longitudinal, crosswise and the two oblique angles (at 45° to the previous ones and at 90° to each other).

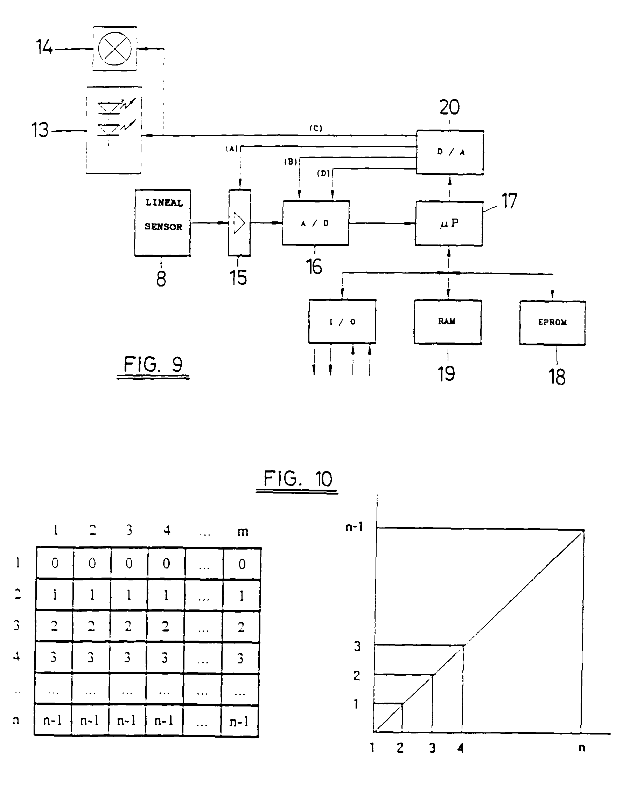

Colour profile curves are extracted from colour level distribution matrixes. To extract the colour profile curve according to any of the principle dimensions, the matrix is run through along the dimension selected, with graphic representation of the values which at each position of the dimension selected attain a function of the elements within the matrix contained within the dimension perpendicular to that selected. (The value reached at each position is to be a function of the elements of the dimension perpendicular to that selected, for example its sum, mean or any other function). As an example the case may be taken of one of the colour distribution matrixes of a zone under analysis being green, and constructed of n rows and m columns. The values of each row are considered identical and increase by one unit in the next row according to the succession 0,1,2,3,4, ... Thus to find the curve of the green profile in the said matrix according to the crosswise dimension, that is along the length of the rows (longitudinal dimension being along the columns while oblique dimensions are along the diagonals), the value attained by the function to be applied to each element within it is found for each row (for example, their mean) and the values obtained for each row are shown graphically according to the row which they correspond to. A straight line would be obtained in the example cited. Points of the curve are obtained by representing pairs of values corresponding to the number of the file and the value calculated for each of them by coordinates (see Figure 10).

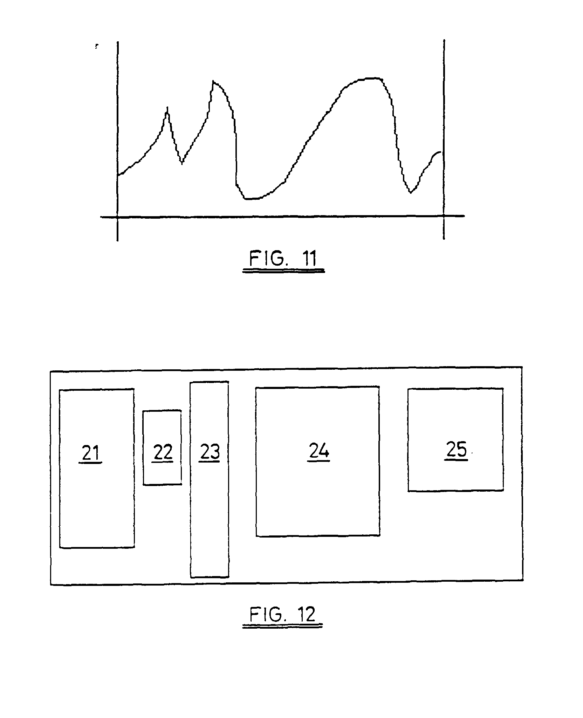

The straight line of the example would be a case of the profile of a very special colour. A curve that is more similar to a real case could be that shown in the graph of Figure 11.

Once the colour profile curves have been obtained, for each one the parameters associated with it and considered to be of interest may be extracted, such as: absolute maximum and minimum, relative maximum and minimum, the interval between maximums, points of inflection, intervals of zero slope, etc.; thus this attempts to establish the comparison between the extracted colour curves and those which are stored as standards by comparing the above - mentioned respective parameters.

The use of all the parameters extracted from the colour profile curves and the statistical parameters is a very powerful and safe tool for the validation of the zones which are being subjected to analysis. Zone validation arises from the comparison of the said parameters with those stored in the memory as standards. If a note is to be validated then all of the zone subjected to analysis have to be validated successfully.

For each zone selected both optical resolution and sensitivity will be set, together with the speed of note transport, the system of illumination and parameters (of all those possible, only those which attain a certain degree of importance in validation of the zone will be considered) which are most suitable for the type of analysis to be undertaken in each case.

Thus for example, infrared illumination by transmission is to be used as a valid lighting method for gaining a contrasted image of a zone in which the main feature is a water mark, while a zone defined as being for chromatic analysis will be illuminated by visible reflected white light, while optical resolution is to be a function of the level of detail required in analysis, etc.

A special case of the analysis by zones as described occurs when a single zone is defined for a note, occupying a part or all of the same.

Another special case of analysis arises when a single zone is subjected to double analysis. This means that once the zone in question has been analyzed under certain conditions, the reverse gear of the motor is activated followed by reactivation of forward transport so that the same zone is re-analyzed under different conditions (for example, another type of lighting or resolution).

As well as the methodology for the validation of notes by the zonal analysis described above, the invention also includes an automatic centering process, by which notes are kept parallel to the axis of the trajectory along which they are guided, and which permits, on condition that this parallel position is maintained, the introduction of notes in any position over the entry mouth, unlike currently existing introduction systems, which demand a uniform entry position, either with the notes resting against one end of the entry mouth, or perfectly centered respecting the axis of the said mouth, all of this applying to selectors which admit different types of note and notes of different widths.

Automatic centering is applicable in identification systems which use a lineal sensor with a field of vision that is greater than the width of notes.

In a first phase the width of a note is measured by counting the number of photoelements which are interrupted when the said note is introduced. Infrared lighting by transmission would typically be used for this purpose. The position of the note with respect to the lineal sensor is determined by the position of the first and last photoelements that are interrupted in relation to the first photoelement within the lineal sensor. On the basis of this said positioning axes are displaced and the first photoelement that is interrupted is set as the new origin for coordinates. This origin is used as the reference for each of the analysis zones defined for each denomination of note. The position of the note throughout transport and analysis is continuously checked, to ensure that the axis of the note is parallel to the axis of transport. If a lack of parallel positioning is detected, then the process is interrupted and the note is rejected, given that possible lack of exactitude in zonal analysis may arise.

The main characteristic of the automatic centering process consists of the fact that all types of note of less than maximum width may be analyzed correctly, however crosswise they are located on introduction.

Another feature covered by this patent consists of the phase of self - calibration used for compensating tolerances in the manufacture of the image acquisition system, together with those deriving from the said system in usage over time and variations in ambient conditions.

The self - calibration phase adjusts the response of the photosensor and illumination systems such that identical and uniform results are achieved on analyzing the same note under different conditions and by different analysis units (different note validators).

Self - calibration is applied to correct differences in the sensitivity and darkness current of the photoelements which compose the lineal sensor, as well as the different levels of emission of light sources arising due to manufacturing tolerances as well as those deriving from ageing or environmental factors. In the first place, in the absence of a note and without lighting, the photoelements of the lineal sensor are read and the resulting values are stored in the memory. These said values are taken as reference for zero signal. Again without a note being in place a preferably white reference surface having a similar size to the field of vision of the lineal detector used is illuminated. Readings corresponding to each of the photoelements of the lineal sensor are taken for each of the available types of illumination. The values read are stored in the memory, and represent the scale range of the measuring system, or a percentage of the same.

During the subsequent process of reading a note, each of the calibration values corresponding to each photoelement and type of illumination is used, with the aim of normalizing readings taken of the note which is being examined.

The apparatus for carrying out the method described, which is defined in claim 9, includes means of transporting and guiding the document to be analyzed, means of illuminating the said document, means of acquiring images composed of a lineal photosensor and electronic means of signal processing.

The electronic signal processing equipment advantageously includes a video amplifier, an analogue - digital converter and a microprocessor unit. These items of equipment also include a digital - analogue converter, the outputs from which control the range of the analogue - digital converter, the reference level of the video amplifier and the level of illumination provided by the infrared and white light sources.

The characteristics of the invention may be better understood by making use of the following description, which makes reference to the enclosed diagrams, in which a non-exclusive example of embodiment is shown.

In the diagrams:

Figure 1 shows a diagrammatic longitudinal section of an item of apparatus constructed according to the invention.

Figure 2 shows in diagram form different forms of diaphragms that may be used in the apparatus shown in Figure 1.

Figure 3a is a diagram of the optical system included in the apparatus shown in Figure 1.

Figure 3b shows a variant of the execution of the optical diagram shown in Figure 3a.

Figure 4 is a graph of the spectrum of the radiation corresponding to a white light source.

Figure 5 represents the transmission characteristics of an optical filter which eliminates close infrared radiation, between 700 and 1100 nm.

Figure 6 is a graph similar to that contained in Figure 5, and represents the transmission characteristics of an optical filter which eliminates part of close infrared radiation.

Figure 7 is a graph which shows the distribution curve of the illumination obtained by the infrared or broad spectrum light sources.

Figure 8 shows in diagram form the arrangement of the broad spectrum reflected light sources.

Figure 9 is a block diagram of the electronic signal processing and apparatus control system.

Figure 10 includes the distribution matrix of the colour levels of a zone of the document which is under analysis together with the curve of profiles obtained from the said matrix, representing pairs of values corresponding to row number and the value calculated for each in the form of coordinates.

Figure 11 shows a curve similar to that in Figure 10, but in this case corresponding to an actual case.

Figure 12 shows a possible subdivision of a document into different zones for analysis.

The apparatus for identifying bank notes is composed of a system for the guiding and transport of notes, an image acquisition system and an electronic signal processing and apparatus control system.

The transport and guide mechanism is composed of a motor (1) able to work in either direction, preferentially step by step, coupled to two transport pulleys (2) situated at either side of the zone used for analysis of the bank note which is channelled between two parallel plates (3) and (4), the transparent upper plate (3) being located in the reading zone, while the lower plate (4) is translucent white, this last item also carrying out the functions of a diffusor for the lighting system by transmission and the calibration surface.

The reading zone consisting of a line (5) perpendicular to the axis of the motion of the bank note has no mechanical elements whatsoever (such as transmission belts, pulleys, etc.) which could perturb the perfect visibility of the whole of the note, by both transmission and reflection.

At the ends of guide plates 3 and 4 pairs of photodetectors (6) and (7) are to be placed, to detect the introduction of the note on one side and its admission on the other.

The image acquisition system is composed of an optical system and a lighting system.

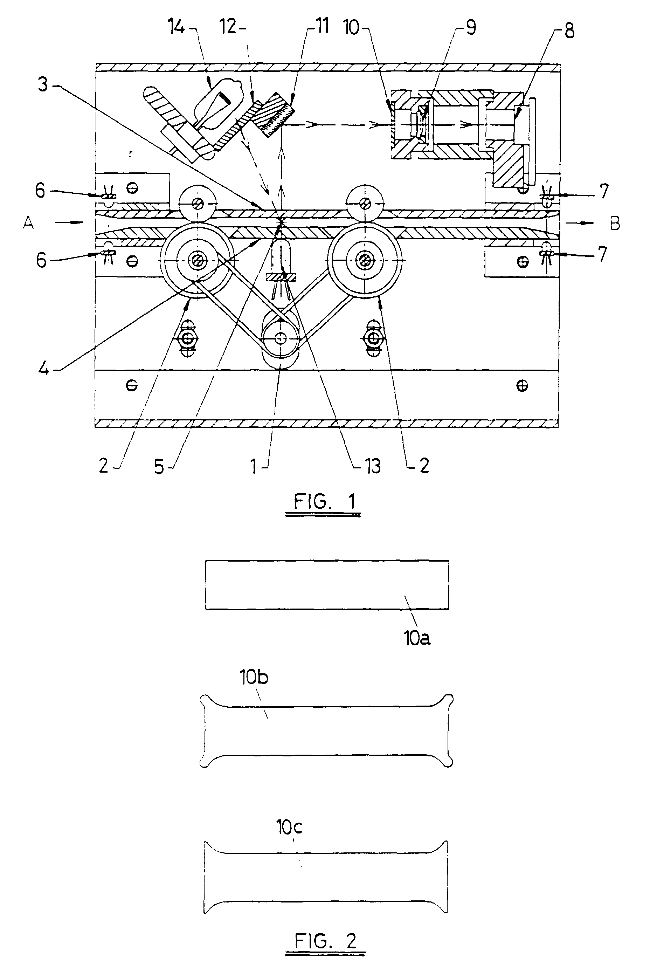

The optical system of the apparatus has the purpose of obtaining a suitable image on the surface of the lineal photosensor (8) based on the feature which is the object of analysis as constituted by the line (5) that is crosswise to the direction of movement of the note, running from one end to the other of the transport channel. The said line 5 together with the transport device creates the image of the entire bank note in which the zones that are the object of analysis are located, line by line. In Figure 1, which shows the apparatus, the line visible to the optical system is shown in profile above point 5.

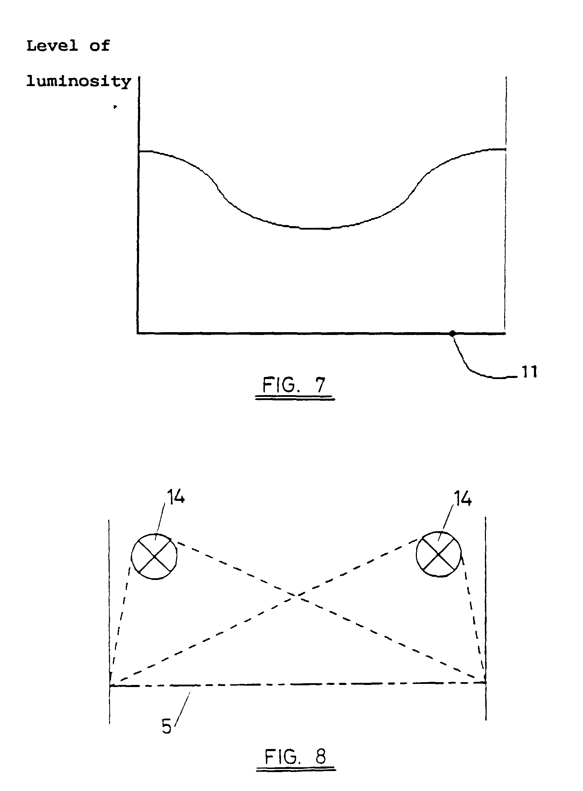

The optical system is composed of: a lens (9), a diaphragm (10), a mirror (11) and an optical filter (12). The lens (9) has been calculated to minimize distortion of the image obtained on the basis of definition of the dimensions of the image, the object and the distance between the two, with the result that it is a meniscus lens having certain radii of curvature. To attain a suitable focus throughout the entire length of the lineal sensor and fundamentally towards its ends, a rectangular diaphragm (10a) has to be included (Figure 2). In the apparatus that is the object of the patent, the rectangular design of the diaphragm is modified by the inclusion of an aperture the size of which is increased towards the ends of the same so as to (as well as attaining suitable focus) compensate for the loss of luminosity which occurs towards the ends and which is intrinsic to the type of lens used. Two designs of diaphragm are shown in Figure 2 (10b and 10c) both of which meet the above-mentioned objectives. Compensation of luminosity over and above that attained by the diaphragm employed is attained by a distribution of the illumination, this being more intense towards the ends than it is at the centre of the line that is being subject to observation, as is shown in Figure 7.

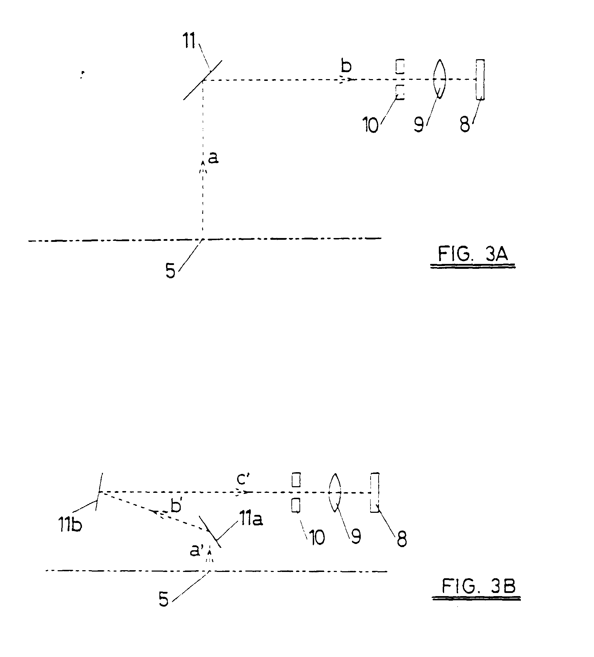

Between line 5 that is under observation and lineal photosensor (8) there are one or more mirrors (11 and 11a) which have the purpose of reducing the space occupied by the optical system. Figure 3a shows a diagram of an embodiment of a mirror (11), while Figure 3b shows two mirrors (11a and 11b), both of these arrangements meeting the relation a + b = a' + b' + c', in which a = the distance between the line (5) under observation and the mirror (11), b = the distance between the mirror (11) and the lens (9), a' = the distance between line (5) under observation and mirror (11a), b' = the distance between the mirrors (11a and 11b), and c' = the distance between mirror (11b) and the lens (9).

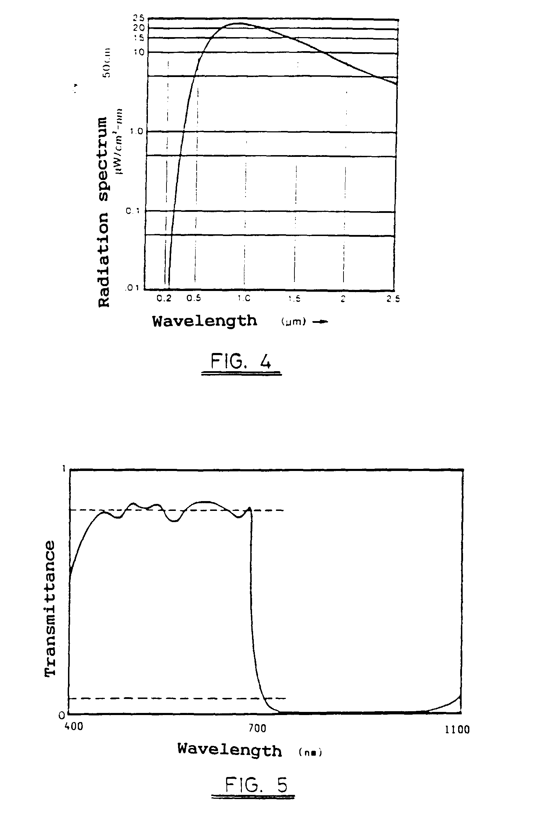

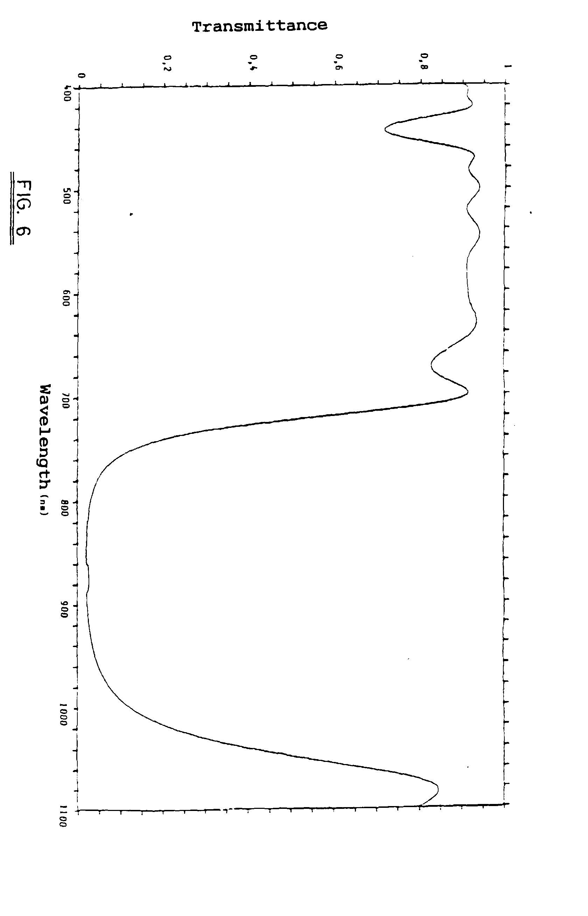

Given that halogen lamps are used as a white light source, together with the content of these lamps in terms of the infrared spectrum (see Figure 4), for certain documents the chromatic analysis of the same may be improved by the elimination of this component with the inclusion of an optical filter that totally absorbs the infrared part of the spectrum, which otherwise could give rise to alteration of the chromatic analysis within the visible spectrum. Figure 5 shows the response of an optical filter of the type mentioned, in which infrared spectrum radiation is eliminated.

Nevertheless, in other documents it is of interest (due to the mix of visible and infrared inks) to be able to use simultaneous illumination with white and infrared light. Depending on the desired proportions of infrared and visible light, the most appropriate infrared absorption filter may then be designed. Figure 6 shows an example of a filter that partially absorbs infrared light, which may be used with photosensors having a response from 400 nm to 1100 nm of the spectrum (as is the case with silicon sensors).

In Figure 1, the location of the said infrared absorption filter (12) may be seen.

Two light sources are preferentially used in the illumination system of the image acquisition system: infrared light by transmission and reflected broad spectrum light.

In infrared light that is transmitted the emitters (13) are mounted grouped in a line along the lower part of the translucent diffusor plate (4). The emitters are of the high efficiency LED type, and give illumination by transmission at a preferential wavelength of 880 nm or 950 nm. To obtain intensified distribution of lighting at the ends, either a greater excitation current is used for the LEDs there, or the LEDs are more concentrated spatially at the ends than they are at the central area. Figure 7 shows the specific distribution curve for illumination obtained by the usage of either procedure.

Two halogen lamps (14) are used for illuminating the bank note with broad spectrum light on its upper surface through transparent plate (3). To attain a distribution of the illumination similar to that described for infrared illumination, each of the halogen lamps is located close to each end of line (5) which is the object of observation, in the form as is shown by the diagram in Figure 8.

Lastly, the electronic signal processing and apparatus control system is shown in Figure 9, using a block diagram of the electronic system used. The electronic signal generated by the lineal photosensor (8) is processed by the amplifier unit (15) and is digitalized in the analogue-digital conversion unit (16) to ready it for processing in the microprocessor unit (17). The microprocessor unit (17) may be composed of one or two microprocessors, depending on the amount and complexity of the information to be processed. For example, if a colour CCD with a large number of pixels (1024 or more pixels per colour component) is used as lineal photosensor, then it becomes of great interest to expressly dedicate one 16 bit microprocessor to the processing of the signal generated by the lineal sensor, and to use an auxiliary microprocessor for the control of peripheries (motor, lighting, inputs - outputs, ...) and auxiliary functions.

The working sequence of the microprocessor unit together with the values representative of valid bank notes are to be stored in the non-volatile memory unit (18), which is typically of the EPROM type.

Likewise for the temporary storage of data acquired in the process of analyzing bank notes and the variables used during the execution of the program a volatile memory (19) is to be used, typically one of the dynamic RAM type.

The apparatus which is the object of this patent includes a digital-analogue converter unit (20) connected to the microprocessor unit for usage in self-calibration and the normalization of acquired signals.

During the self-calibration process, which is carried out in the absence of bank notes, the first procedure is compensation of the darkness current of the lineal photosensor. Acquisition of an image is carried out for this purpose (a line is acquired) without any illumination. The electric signal corresponding to the said acquisition represents the darkness current of the lineal photosensor. This said signal, once it has been digitalized and sent through the microprocessor unit, is sent on to the digital-analogue converter (20) for re-sending (channel A of the D/A converter) to the video amplifier unit (15) with the aim of annulling the value of the said darkness current. Following this the alternative connections to different light sources are made, acquiring the image of one line for each source. Each line acquired, once it has been suitably digitalized, is sent through the microprocessor unit (17) to be stored in the RAM memory (19). In fact as many values are stored for each type of illumination as there are elements within the lineal photosensor.

In the phase during which bank notes are read and for each of the successive forms of illumination that are to be used, the values corresponding to each of the elements of the lineal photosensor which were stored during self-calibration for the different light sources as described above are recovered from the RAM memory (19).

The said values are provided to the digital-analogue converter (2) for usage as different scale ranges of the A/D converter (16), in perfect synchronization with the acquisition of each one of the lineal sensor elements (8). The corresponding output (channel B) from the D/A converter (20) is applied at the input of the range of measurement of the A/D converter (16) in such a way that the signal generated by each of the elements of the lineal photosensor has its own range of measurement supplied from the signal generated in the process of the self-calibration by the same element. It is thanks to this special self-calibration device that high overall image acquisition system stability is achieved against manufacturing tolerances, different ambient conditions and ageing.

Additionally, the D/A converter (20) is also used as a means of control for changing the level of illumination (through its channel C) depending on the luminosity which has been defined for the analysis of each of the zones of interest, according to the process described above.

Likewise it is possible to set the range of measurement of the A/D converter (16) to be suitable for the level of contrast of the image existing in each of the zones being analyzed, while this may result in a different range depending on the zone and type of bank note. This said modification in the range of measurement may be obtained either through output B channel, which was used in the process of self-calibration, or another output channel D from the D/A converter (20) and which also acts on the range of measurement of the A/D converter (16).

The apparatus described works as follows:

The manual introduction of a bank note is detected at entrance mouth A by the pair of photoelements (6) placed there for this purpose. Once the entrance of a bank note has been detected, the bank note transport system is activated, this being composed of one step by step motor (1) and rollers (2), the self-calibration process being carried out while the bank note is being transported towards the zone of reading (5).

Following the above steps the infrared by transmission illumination system (13) is connected and awaits the arrival of the bank note at the reading zone (5) where it is rapidly detected by the electronic system of the apparatus by the change produced in the signal captured by the lineal photosensor (8) which comes from the infrared illumination (13).

Inspection is then made of whether the bank note is correctly aligned with respect to the axis of the guideway. For this purpose check is first made of the orthogonality of the frontal edge of the bank note respecting the axis of the guideway, for which a narrow margin of a small number of successively acquired lines is conceded (one or two, or three at most) for which purpose all of the elements of the lineal photosensor, corresponding to a broad central zone within its field of vision shows the typical gradient of signal corresponding to the presence of the note within this number of lines (while if this is not the case then the note is considered to be out of line and is rejected). The width of the bank note is then immediately measured and automatic centering of the coordinates of the image capture system is carried out respecting the position of the note within the guideway according to the procedures described above.

Once the width of the bank note is known then so too is its denomination. To know its position on entrance, analysis of one or more of its primary special zones is carried out for small sized notes, with the aim of rapidly detecting its entrance position, and by which the note is classified (by its type and face on entrance). For example, in current Spanish bank notes the direction in which they are introduced is detected by rapid analysis of the central zone of the edge making entrance by illuminating it with white light by reflection and observing whether the said zone is preferentially white or not, as this would be the case if the note has been introduced with its water mark forwards (white zone by reflection) or the other way around (a coloured zone). It does not matter during this first analysis if some forgeries are not detected, as its purpose is simply to classify notes according to their denomination and the direction in which they have been introduced. Possible forgeries are detected by the exact analysis which occurs at a later stage.

Once the note has been classified, zonal analysis of the same is carried out according to the sequence set in the memory of the program stored in the apparatus for the said note and position in which it has entered. Figure 12 shows an example of the subdivision of a bank note into zones for analysis, in which zone 21 corresponds to a surface occupied by the water mark, zone 22 corresponds to an area in which the series number of the note is printed, zone 23 to a surface which quite broadly surrounds the security thread, zone 24 to a part of the surface of the note which presents a strongly coloured scene, due to which it is defined as being suitable for chromatic analysis, and zone 25 corresponds to a part of the surface selected for analysis under infrared illumination, due to the concentration of inks which are strongly absorbent of infrared radiation.

As the different zones to be analyzed are reached and while they are being acquired line by line by the image acquisition system, the different sources of illumination are connected as set for the analysis of each zone. Likewise, the following are modified: intensity of lighting, resolution of the image acquisition system, the range of conversion of the digitalizer (16), the speed of the transport motor..., for each zone, according to the settings of the program.

Even when it is planned to analyze a certain zone twice, the direction of movement of the motor is inverted, after which forward motion is re-engaged (the second time being under different conditions from the first). While notes are advancing, their width is measured systematically (e.g., in the spaces between areas for analysis). Together with checks on width, checks are made that the note is parallel to the axis of the guideway, and if both checks do not produce satisfactory results then it is returned.

The length of notes is also measured by the number of lines acquired during the transit of the same through the inspection zone (5). Evidently, this measurement is taken into account in the procedure of rejection of the same, if it does not coincide with the length assigned to it in the program corresponding to the said note. Once analysis of the zones of all the bank note has been undertaken, calculation of the statistical parameters assigned to each zone is carried out, including extraction of the foreseen colour profile curves for each zone, and calculation of the parameters extracted from the said curves. Once all parameters have been calculated, these are compared with those stored in the memory of the program which correspond to the denomination and position of a valid note in agreement with the initial classification, it not being necessary to compare the parameters corresponding to the remaining positions of the same bank note, nor with those corresponding to other denominations.

As a result of the said comparison, bank notes are classified as valid or forged. If they are valid, then the note is let into admission mouth B, this admission being counted once the note has passed between the pair of photoreceptors (7). If the note is invalid, it is expelled through entrance mouth A, by activation of the transport mechanism in reverse until the note is removed by hand, which is detected by the pair of photodetectors (6).

## Claims

1. A method for characterizing and discriminating bank notes and documents which are legal tender, including transport of the note or document to be analyzed along a route in which the said document is illuminated, and images of the same are acquired by a linear sensor, comprising the stages of effecting a process of autocalibration before acquiring images of the note, to compensate for the tolerance and deviation in the image acquiring system, identification of the denomination and position of the note to be analyzed on its entrance into the above mentioned route, examination of certain characteristic zones of the note depending on its denomination and entrance position, defining these by their dimensions and position within the note, characterized by the analysis of the colouration of the said images, and by carrying out individual analysis of the said zones under particular conditions which depend on the characteristics of each zone while, during the transport of the note, successive measurements are made of its self-centering throughout the image acquisition zone.

2. A method according to claim 1, characterized in that the self-calibration process includes the stages of: (a) obtaining a first lineal reading without a note and illumination, and storing the values obtained which correspond to each photoelement of the lineal sensor, which serves as a reference zero for the signal; and (b) obtaining a second lineal reading without a note and with illumination by each of the different available sources of illumination, and storing the values obtained in the memory, these corresponding to each photoelement contained within the lineal sensor and for each one of the sources of illumination, these representing the scale range of the measuring system or a percentage of the same.

3. A method according to claim 1, characterized in that the denomination and position in which notes are introduced are determined by measurement of their width and the identification of those characteristics that are present at the initial zone of the document.

4. A method according to claim 1, characterized in that once the characteristic zones of the document have been selected, each of these is assigned, as particular conditions for undertaking its analysis, the type and intensity of illumination to be used, the resolution and sensitivity of the image capture system, signal processing and the detection of the identifying parameters for each zone, and the speed of transport of the document.

5. A method according to claims 1 and 4, characterized in that zones are defined for multiple analysis, in which two or more image acquisitions are made under different conditions.

6. A method according to claim 1, characterized in that analysis of the image of each zone is undertaken by obtaining curves of the colour profiles, on the basis of the colour level distribution matrixes within the said zone, and by the extraction, on the basis of these curves of parameters of interest, such as minimums, absolute maximums and relative maximums, points of inflection, mean value and range.

7. A method according to claim 1, characterized in that during the initial phase of the reading of notes, and by transmission illumination the position of each side of the note in question is detected in the lineal sensor, and the origin of coordinates is then assigned to the sensor element corresponding to the side of the note that is closest to the start of the said sensor; after which successive measurements of the positions of the sides of the note are made, on its passage through the image acquisition zone to check on its being centered.

8. A method according to claim 1, characterised in that during the initial phase of the reading of notes, and by transmission illumination, successive lines are acquired during the advance of the note, and for each line the number of elements of the lineal sensor that are interrupted is analysed, accepting alignment of the document as correct when this goes above a preestablished minimum number of elements that are interrupted during acquisition of the first lines.

9. Apparatus for the characterization and discrimination of bank notes and documents that are legal tender, which includes means for transport and guiding (1, 2, 3, 4), means of illumination (13, 14), a lineal photosensor (8) and electronic means for the processing of signals (15, 16, 17, 18, 19, 20), characterised in that it comprises means for controlling the type and level of illumination, means for controlling the speed and direction of the transport means and means for controlling the resolution and sensitivity of the photosensor, and in that it contains an optical system that is composed of: a lower plate (4) which is translucent with a diffuser surface and an upper plate (3) that is transparent, between which notes pass within the observation zone; at least one incident surface (12) which directs images to the lineal photosensor (8); a corrective diaphragm (11) for luminosity and focusing control between the mirror (12) and the lineal photosensor (8); and a meniscus lens (9) located immediately behind the diaphragm (11); and in that the means illumination include an infrared light source (13), formed by a line of photodiodes which are positioned in such a way that they illuminate documents by transmission, and a broad spectrum light source (14) which is positioned in such a way that it illuminates documents by reflection.

10. Apparatus according to claim 9, characterized in that the line of photodiodes of the infrared light source (13) is composed of different groupingss of photodiodes, each of which is powered by its own source of electricity.

11. Apparatus according to claim 9, characterized in that the line of photodiodes presents a higher concentration of photodiodes at its ends than it does in the central zone.

12. Apparatus according to claim 9, characterized in that the broad spectrum light source (14) is composed of incandescent lamps, preferentially two halogen lamps located close to the sides of the apparatus.

13. Apparatus according to claim 9 and 12, characterized in that between the broad spectrum light source (14) and the document there is a filter (12) which completely or partially eliminates infrared radiation.

14. Apparatus according to claim 9, characterized in that the broad spectrum spectrum light source (14) is a fluorescent lamp.

15. Apparatus according to claim 9, characterized in that the lineal photosensor (8) is a lineal CCD colour sensor with outputs in red, green and blue.

16. Apparatus according to claim 9, characterized in that the lineal photosensor (8) is a group of photodiode triads with filters that are red, green and blue.

17. Apparatus according to claim 9, wherein the electronic signal processing equipment includes a video amplifier (15), an analogue -digital converter (16), and a microprocessor unit (17), characterized in that it also includes a digital - analogue converter unit (20) the outputs from which control the range of analogue - digital converter (16), the reference level of the video amplifier (15) and the level of illumination provided by the infrared (13) and white (14) light sources.

## Patentansprüche

1. Verfahren zur Merkmalprüfung und Unterscheidung von Banknoten und Dokumenten, die gesetzliches Zahlungsmittel sind, einschließlich des Transports der zu analysierenden Banknote oder des Dokuments entlang einer Strecke, auf der das Dokument beleuchtet wird und Bilder desselben durch einen linearen Sensor erfaßt werden, umfassend die Stufen der Durchführung eines Selbstkalibrierverfahrens, bevor Bilder der Banknote erfaßt werden, um die Toleranz und Abweichung im Bilderfassungssystem auszugleichen, der Identifizierung der Werteinheit und Position der zu analysierenden Banknote bei ihrem Eintritt in die oben genannte Strecke, der Untersuchung von bestimmten charakteristischen Bereichen der Banknote, abhängig von ihrer Werteinheit und Eintrittsposition, wobei diese durch ihre Maße und Lage innerhalb der Banknote bestimmt werden, gekennzeichnet durch die Analyse der Farbgebung der Bilder und durch Ausführung individueller Analysen der Bereiche unter besonderen Bedingungen, die von den Eigenschaften jedes Bereichs abhängig sind, während beim Transport der Banknote aufeinanderfolgende Messungen bezüglich ihrer Selbst-Zentrierung durch den gesamten Bilderfassungsbereich durchgeführt werden.

2. Verfahren nach Anspruch 1, dadurch gekennzeichnet, daß das Selbstkalibrierverfahren folgende Stufen enthält:
(a) Erhalt einer ersten linearen Ablesung ohne Banknote und Beleuchtung und Speicherung der erhaltenen Werte, die jedem Photoelement des linearen Sensors entsprechen, was als Bezugsnullwert für das Signal dient; und (b) Erhalt einer zweiten linearen Ablesung ohne Banknote und mit Beleuchtung durch jede der verschiedenen zur Verfügung stehenden Beleuchtungsquellen sowie Speicherung der erhaltenen Werte im Speicher, wobei diese jedem Photoelement, das im linearen Sensor enthalten ist, entsprechen, sowie für jede der Beleuchtungsquellen, wobei diese den Meßbereich des Meßsystems oder einen prozentualen Anteil desselben darstellen.

3. Verfahren nach Anspruch 1, dadurch gekennzeichnet, daß die Werteinheit und die Position, in der Banknoten eingeführt werden, durch Messung ihrer Breite und die Identifizierung der Merkmale, die am Eingangsbereich des Dokuments vorliegen, bestimmt werden.

4. Verfahren nach Anspruch 1, dadurch gekennzeichnet, daß, nachdem die kennzeichnenden Bereiche des Dokuments ausgewählt worden sind, jedem von diesen, als besondere Bedingungen zur Durchführung seiner Analyse, die Art und Intensität der zu verwendenden Beleuchtung, die Auflösung und Empfindlichkeit des Bilderfassungssystems, die Signalverarbeitung und die Erfassung der Identifizierungs-Parameter für jeden Bereich sowie die Transportgeschwindigkeit des Dokuments zugeordnet werden.

5. Verfahren nach Anspruch 1 und 4, dadurch geknnzeichnet, daß Bereiche für Mehrfachanalysen bestimmt werden, in denen zwei oder mehr Bilderfassungen unter verschiedenen Bedingungen vorgenommen werden.

6. Verfahren nach Anspruch 1, dadurch gekennzeichnet, daß eine Analyse des Bildes jeden Bereichs vorgenommen wird durch Erlangung von Kurven der Farbprofile auf der Grundlage der Verteilungsmatrizen der Farbintensität innerhalb des Bereichs, und durch den Auszug von bedeutenden Parametern auf der Grundlage dieser Kurven, wie Minima, absolute Maxima und relative Maxima, Beugungspunkte, Mittelwert und Wertbereich.

7. Verfahren nach Anspruch 1, dadurch gekennzeichnet, daß während dor Anfangsphase des Ablesens von Banknoten und mittels Durchleuchtung die Position jeder Seite der betreffenden Banknote im linearen Sensor ermittelt wird und die Herkunft der Koordinaten daraufhin dem Sensorelemrnt zugeordnet wird, das der Seite der Banknote entspricht, die sich am nächsten zum Start des Sensors befindet; woraufhin aufeinanderfolgende Positionsmessungen der Seiten der Banknote auf ihrem Weg durch den Bilderfassungsbereich durchgeführt werden, um ihre Zentrierung zu überprüfen.

8. Verfahren nach Anspruch 1, dadurch gekennzeichnet, daß während der Anfangsphase des Ablesens von Banknoten und mittels Durchleuchtung aufeinanderfolgende Zeilen erfaßt werden, während die Banknote weiterläuft, und für jede Zeile die Anzahl von Elementen des linearen Sensors, die unterbrochen werden, analysiert wird, wobei die Ausrichtung des Dokuments als korrekt akzeptiert wird, wenn diese über einer zuvor festgelegten Mindestanzahl von Elementen liegt, die während der Erfassung der ersten Zeilen unterbrochen werden.

9. Vorrichtung zur Merkmalprüfung und Unterscheidung von Banknoten und Dokumenten, die gesetzliches Zahlungsmittel sind, umfassend Transport- und Führungsmittel (1, 2, 3, 4), Beleuchtungsmittel (13, 14), einen linearen Photosensor (8) und elektronische Mittel zur Verarbeitung von Signalen (15, 16, 17, 18, 19, 20), dadurch gekennzeichnet, daß sie Mittel zur Kontrolle der Art und Intensität der Beleuchtung, Mittel zur Kontrolle der Geschwindigkeit und Richtung der Transportmittel sowie Mittel zur Kontrolle der Auflosung und Empfindlichkeit des Photosensors umfaßt, und daß sie ein Optisches System enthält, bestehend aus: einer unteren Platte (4), die lichtdurchlässig ist mit einer Diffusionsoberfläche und oberer Platte (3), die durchsichtig ist, zwischen denen Banknoten innerhalb des Ablesebereiche hindurchlaufen, mindestens einer Einfalloberfläche (12), die Bilder zum linearen Photosensor (8) lenkt; einer korrigierenden Blende (11) für Helligkeit und zur Kontrolle der Scharfeinstellung zwischen dem Spiegel (12) und dem linearen Photosensor (8); und einer Meniskuslinse (9), die unmittelbar hinter der Blende (11) angebracht ist; und daß die Beleuchtungsmittel eine Infrarotlichtquelle (13) umfassen, die von einer Reihe von Photodioden gebildet wird, die in solcher Weise angebracht sind, daß sie Dokumente mittels Durchlassung beleuchten, sowie eine Breitspektrum-Lichtquelle (14), die in solcher Weise angebracht ist, daß sie Dokumente durch Reflexion beleuchtet.

10. Vorrichtung nach Anspruch 9, dadurch gekennzeichnet, daß die Reihe von Photodioden der Infrarotlichtquelle (13) aus verschiedenen Gruppierungen von Photodioden besteht, von denen jede von ihrer eigenen Stromquelle versorgt wird.

11. Vorrichtung nach Anspruch 9, dadurch gekennzeichnet, daß die Reihe von Photodioden an ihren Enden eine höhere Konzentration von Photodioden aufweist als im mittleren Bereich.

12. Vorrichtung nach Anspruch 9, dadurch gekennzeichnet, daß die Breitspektrum-Lichtquelle (14) aus weißglühenden Lampen besteht, vorzugsweise zwei Halogenlampen, die nahe an den Seiten der Vorrichtung angebracht sind.

13. Vorrichtung nach Anspruch 9 und 12, dadurch gekennzeichnet, daß sich zwischen der Breitspektrum-Lichtquelle (14) und dem Dokument ein Filter (12) befindet, der Infrarotstrahlung vollständig oder teilweise beseitigt.

14. Vorrichtung nach Anspruch 9, dadurch gekennzeichnet, daß die Breitspektrum-Lichtquelle (14) eine Leuchtstoffröhre ist.

15. Vorrichtung nach Anspruch 9, dadurch gekennzeichnet, daß der lineare Photosensor (8) ein linearer CCD-Farbsensor mit Ausgabesignalen in rot, grün und blau ist.

16. Vorrichtung nach Anspruch 9, dadurch gekennzeichnet, daß der lineare Photosensor (8) aus einer Gruppe von Photodioden-Dreiergruppen mit Filtern, die rot, grün und blau sind, besteht.

17. Vorrichtung nach Anspruch 9, wobei die Anlage zur elektronischen Signalverarbeitung einen Video-Verstärker (15), einen Analog-Digital-Umwandler (16) und eine Mikroprozessoreinheit (17) umfaßt, dadurch gekennzeichnet, daß sie ebenfalls eine Digital-Analog-Umwandlereinheit (20) umfaßt, deren Ausgabesignale den Wertbereich des Analog-Digital-Umwandlers (16), die Bezugsintensität des Video-Verstärkers (15) und die Intensität der Beleuchtung steuern, die von den Infrarot- (13) und Weiß- (14) Lichtquellen geliefert wird.

## Revendications

1. Procédé pour caractériser et distinguer des billets de banque et des documents bancaires ayant cours légal, comprenant le transport du billet ou document à analyser sur un trajet où ledit document est éclairé, et des images de celui-ci sont acquises par un capteur linéaire, comprenant les étapes consistant à effectuer une opération d'auto-étalonnage avant l'acquisition d'images du billet, pour compenser la tolérance et l'écart existant dans le système d'acquisition d'images, à identifier la dénomination et la position du billet à analyser à son entrée sur le trajet précité, à examiner certaines zones caractéristiques du billet en fonction de sa dénomination et de sa position d'entrée, à définir celles-ci par leurs dimensions et leur position sur le billet, caractérisé par l'analyse de la coloration desdites images, et par l'analyse individuelle desdites zones dans des conditions particulières qui dépendent des caractéristiques de chaque zone tandis que, pendant le transport du billet, des mesures successives de son centrage automatique sont faites dans toute la zone d'acquisition d'image.

2. Procédé selon la revendication 1, caractérisé en ce que l'opération d'étalonnage automatique comprend les étapes consistant : (a) à réaliser une première lecture linéaire sans billet ni éclairement, et stocker les valeurs obtenues qui correspondent à chaque photo-élément du capteur linéaire, qui sert de zéro de référence pour le signal; et (b) à réaliser une deuxième lecture linéaire sans billet et avec éclairement par chacune des différentes sources d'éclairement disponibles, et stocker dans la mémoire les valeurs obtenues, celles-ci correspondant à chaque photo-élément contenu dans le capteur linéaire et pour chacune des sources d'éclairement, celles-ci représentant les limites de l'échelle du système de mesure ou un pourcentage de celle-ci.

3. Procédé selon la revendication 1, caractérisé en ce que la dénomination et la position dans laquelle des billets sont introduits sont déterminées en mesurant leur largeur et en identifiant les caractéristiques présentes dans la zone initiale du document.

4. Procédé selon la revendication 1, caractérisé en ce qu'une fois que les zones de caractéristiques du document ont été sélectionnées, à chacune d'elles sont attribués, en tant que conditions particulières pour entreprendre son analyse, le type et l'intensité d'éclairement à utiliser, la définition et la sensibilité du système de saisie d'images, du traitement de signaux et de la détection des paramètres d'identification pour chaque zone, et la vitesse de transport du document.

5. Procédé selon les revendications 1 et 4, caractérisé en ce que des zones sont définies pour une analyse multiple, lors de laquelle deux acquisitions d'images ou davantage sont faites dans des conditions différentes.

6. Procédé selon la revendication 1, caractérisé en ce que l'analyse de l'image de chaque zone est entreprise en obtenant des courbes des profils de contours, sur la base des matrices de répartition de niveau de couleur dans ladite zone, et en extrayant sur la base de ces courbes des paramètres à prendre en compte, tels que des minima, des maxima absolus et des maxima relatifs, des points d'inflexion, une valeur moyenne et des limites.

7. Procédé selon la revendication 1, caractérisé en ce que, pendant la phase initiale de la lecture des billets, et par éclairement par transmission, la position de chaque face du billet concerné est détectée dans le capteur linéaire, et l'origine de coordonnées est ensuite attribuée à l'élément du capteur correspondant à la face du billet la plus proche du début dudit capteur; après quoi des mesures successives des positions des faces du billet sont faites, lors de son passage par la zone d'acquisition d'image, pour vérifier son centrage.

8. Procédé selon la revendication 1, caractérisé en ce que, pendant la phase initiale de lecture des billets, et par éclairement par transmission, des lignes successives sont saisies pendant la progression du billet, et pour chaque ligne est analysé le nombre d'éléments du capteur linéaire qui sont interrompus, en considérant comme correct l'alignement du document lorsque celui-ci passe au-dessus d'un nombre minimal préétabli d'éléments interrompus pendant la saisie des premières lignes.

9. Dispositif pour la caractérisation et la distinction de billets de banque et de documents bancaires ayant cours légal, comprenant des moyens de transport et de guidage (1, 2, 3, 4), des moyens d'éclairage (13, 14), un capteur optique linéaire (8) et des moyens électroniques pour le traitement de signaux (15, 16, 17, 18, 19, 20), caractérisé en ce qu'il comprend un moyen pour commander le type et le niveau d'éclairement, un moyen pour commander le vitesse et la direction du moyen de transport et un moyen pour commander la définition et la sensibilité du capteur optique, et en ce qu'il contient un système optique composé de: une plaque inférieure (4), translucide avec une surface de diffusion, et une plaque supérieure (3) transparente, entre lesquelles des billets passent dans la zone d'observation; au moins une surface d'incidence (12) qui dirige des images vers le capteur optique linéaire (8); un diaphragme correcteur (11) pour la commande de luminosité et de netteté entre le miroir (12) et le capteur optique linéaire (8); et une lentille ménisque (9) située juste derrière le diaphragme (11); et en ce que le moyen d'éclairage comporte une source (13) de lumière infrarouge, constituée par une ligne de photodiodes disposées de manière à éclairer des documents par transmission, et une source (14) de lumière à spectre large disposée de manière à éclairer des documents par réflexion.

10. Dispositif selon la revendication 9, caractérisé en ce que la ligne de photodiodes de la source (13) de lumière infrarouge est composée de différents groupements de photodiodes dont chacun est alimenté par sa propre source d'électricité.

11. Dispositif selon la revendication 9, caractérisé en ce que la ligne de photodiodes présente une plus grande concentration de photodiodes à ses extrémités que dans la zone centrale.

12. Dispositif selon revendication 9, caractérisé en ce que la source (14) de lumière à spectre large est composée de lampes à incandescence, préférentiellement deux lampes à halogène situées près des côtés du dispositif.

13. Dispositif selon les revendications 9 et 12, caractérisé en ce que, entre la source (14) de lumière à spectre large et le document, il y a un filtre (12) qui élimine entièrement ou partiellement le rayonnement infrarouge.

14. Dispositif selon la revendication 9, caractérisé en ce que la source (14) de lumière à spectre large est une lampe fluorescente.

15. Dispositif selon la revendication 9, caractérisé en ce que le capteur optique linéaire (8) est un capteur linéaire CCD de couleurs à signaux de sortie en rouge, en vert et en bleu.

16. Dispositif selon la revendication 9, caractérisé en ce que le capteur optique linéaire (8) est un groupe de triades de photodiodes avec des filtres rouge, vert et bleu.

17. Dispositif selon la revendication 9, dans lequel les équipements électroniques de traitement de signaux comprennent un amplificateur vidéo (15), un convertisseur analogique-numérique (16) et une unité centrale à microprocesseur (17), caractérisé en ce qu'il comprend aussi un convertisseur numérique-analogique (20) dont les signaux de sortie commandent la plage de fonctionnement du convertisseur analogique-numérique (16), le niveau de référence de l'amplificateur vidéo (15) et le niveau d'éclairement assuré par les sources de lumière infrarouge (13) et blanche (14).
